# EUROPÄISCHE PATENTSCHRIFT

(11) **EP 1 384 625 B1**
(45) Veröffentlichungstag und Bekanntmachung des Hinweises auf die Patenterteilung: **28.11.2007**
(21) Anmeldenummer: 03016052.7
(22) Anmeldetag: 15.07.2003
(51) Int. Cl.: B60R 5/04

(54) **Betätigungselement für eine Kfz-Sicherheitseinrichtung, wie ein Trennnetz**
Operating element for a vehicule safety device such a separation net
Elément d'actionnement d'un dispositif de sécurité pour véhicule tel qu'un filet de séparation

(30) Priorität: 26.07.2002 DE 10234283
(43) Veröffentlichungstag der Anmeldung: 28.01.2004
(73) Patentinhaber: BOS GmbH & Co. KG, 73760 Ostfildern (DE)
(72) Erfinder: Göbbels, Andreas, 51515 Kürten (DE)
(74) Vertreter: Patentanwälte Ruff, Wilhelm, Beier, Dauster & Partner

(56) Entgegenhaltungen:
- US-A- 6 125 908
- PATENT ABSTRACTS OF JAPAN vol. 017, no. 031 (M-1356), 21. Januar 1993 (1993-01-21) -& JP 04 254230 A (TOYOTA MOTOR CORP), 9. September 1992 (1992-09-09)

## Beschreibung

Die Erfindung betrifft eine Kfz-Sicherheitseinrichtung gemäß dem Oberbegriff des Anspruches 1.

Aus der US 6125908 A, die dem Oberbegriff des Anspruchs 1 entspricht, ist eine Sicherheitseinrichtung in Form einer Laderaumabdeckung für einen Personenkraftwagen bekannt, die mit einem als Betätigungselement dienenden Betätigungshebel versehen ist. Der Betätigungshebel ist außen auf der Oberseite des Gehäuses angeordnet und jederzeit gut zugänglich.

Die JP 04254230 A offenbart eine weitere Sicherheitseinrichtung in Form einer Laderaumabdeckung für ein Kraftfahrzeug, bei der ein Kasettengehäuse fahrzeugseitig befestigbar ist. Die fahrzeugseitige Befestigungsvorrichtung weist ein hebelförmiges Betätigungselement auf, das zwischen einer Ruheposition und einer Öffnungsposition beweglich gelagert ist. Dem Betätigungselement ist eine große Griffmulde zugeordnet, die das Betätigungselement in seiner Ruheposition lediglich teilweise abdeckt. Eine Bedienperson kann so mit ihrer Hand in die Griffmulde hineingreifen und das Betätigungselement aus seiner Ruheposition in die Funktionsposition überführen, in der das Kasettengehäuse entnommen werden kann.

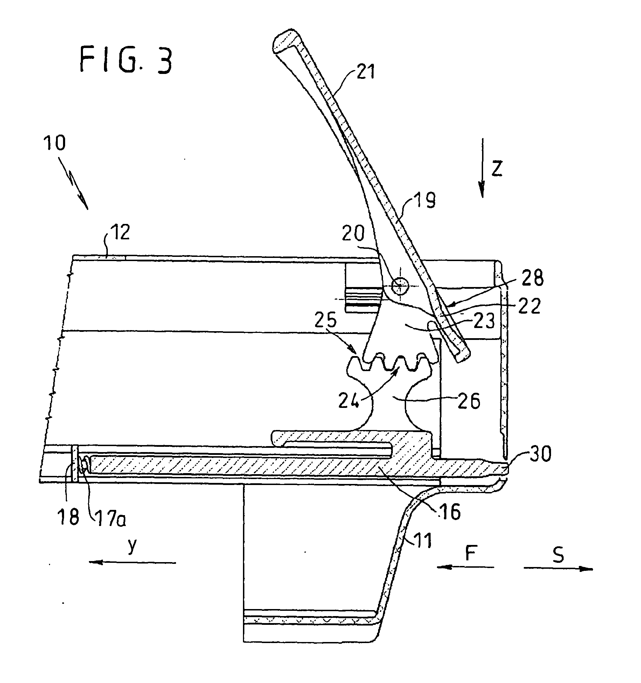

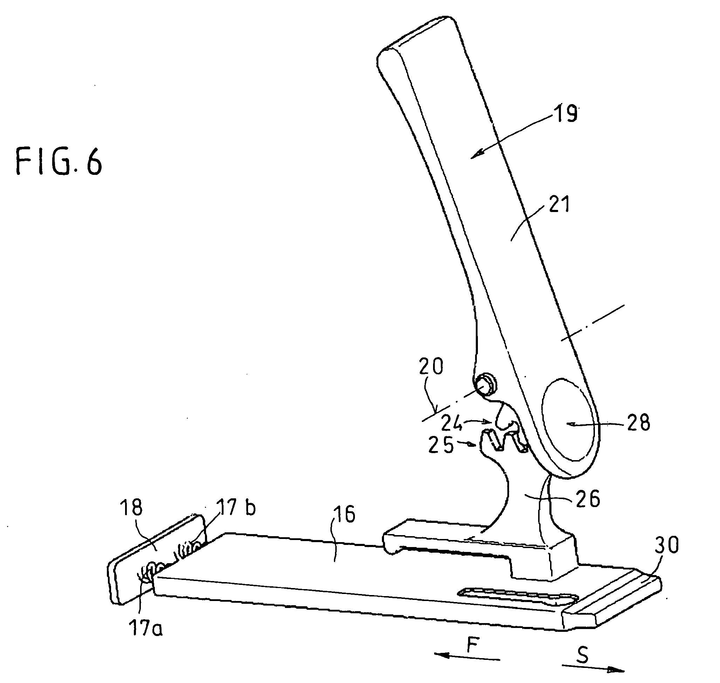

Eine weitere, als Abdeckrollo ausgebildete Kfz-Sicherheitseinrichtung ist aus der DE 40 13 158 C1 der Anmelderin bekannt. Zur fahrzeugseitigen Festlegung des Abdeckrollos sind Befestigungselemente an dem Gehäuse des Abdeckrollos angeordnet, die zwischen einer Sperrposition und einer Freigabeposition verlagerbar sind. Bei dem ersten Ausführungsbeispiel gemäß der Fig. 3 ist ein Druckknopf mit einer Keilfläche vorgesehen, der mit einer an dem als Rastvorsprung ausgebildeten Befestigungselement angeordneten Gegenkeilfläche zusammenwirkt. Beim Ausführungsbeispiel gemäß Fig. 6 ist das Betätigungselement als schwenkbarer Hebel ausgebildet, der einstückig damit verbunden als Befestigungselement einen Rastvorsprung aufweist, der in eine fahrzeugseitige Ausnehmung eintritt.

Zur fahrzeugseitigen Festlegung des Gehäuses der Kfz-Sicherheitseinrichtung ist das Befestigungselement üblicherweise mit sehr kräftigen Federelementen in seine Sperrposition hinein vorgespannt, um das Gehäuse rüttelfest festzulegen, was einerseits hinsichtlich der Sicherheit der Laderaumabdeckung eine besondere Rolle spielt aber auch zur Vermeidung störender Geräusche dient. Probleme treten u.a. dann auf, wenn besonders große fahrzeugseitige Toleranzen zu beachten sind und dementsprechend große Verlagerungswege für die Befestigungselemente erforderlich sind. Außerdem ist der

Bedienungskomfort des Betätigungselementes unter besonderer Beachtung der großen, zu überwindenden Federkräfte von Bedeutung.

Aus der nachveröffentlichten DE 102 186 32 der Anmelderin ist bereits eine einen Spannhebel umfassende Spannvorrichtung bekannt, die für eine Verlagerung der Befestigungselemente geringe Bedienkräfte und große Verlagerungswege ermöglicht.

Aus der DE 197 39 625 C1 der Anmelderin ist ein einarmiger Hebel bekannt, mit dem zwei als Riegelzapfen ausgebildete Befestigungselemente zwischen Ihrer Sperr- und ihrer Freigabeposition verlagert werden können. .

Aus der DE 197 36 170 C1 ist darüber hinaus ein mit Endkappen eines Abdeckrollos zusammenwirkender Betätigungshebel bekannt, der als Betätigungselement zwischen einer Ruheposition und einer Arbeitsposition verlagerbar ist.

Der Erfindung liegt ausgehend von dem eingangs geschilderten Stand der Technik die Aufgabe zu Grunde, eine Kfz-Sicherheitseinrichtung gemäß dem Oberbegriff des Anspruches 1 derart weiterzubilden, daß sie die Möglichkeit einer erleichterten Handhabung bietet.

Die Erfindung löst diese Aufgabe zunächst mit den Merkmalen des Anspruches 1, insbesondere mit denen des Kennzeichenteils.

Das Prinzip der Erfindung besteht somit im wesentlichen darin, dem Betätigungselement neben der Ruheposition und der Arbeitsposition eine zwischen diesen beiden Positionen angeordnete Komfort-Position zuzuordnen. Um das Betätigungselement aus der Ruheposition in die Arbeitsposition zu überführen, muß es zunächst in die Komfort-Position verlagert werden. Die Wirkverbindung zwischen dem Betätigungselement und dem wenigsten einen Befestigungselement besteht während der Überführung des Betätigungselementes aus der Ruheposition in die Komfort-Position nicht. Die Wirkverbindung tritt erst dann in Kraft, wenn das Betätigungselement aus der Komfort-Position in die Arbeitsposition überführt wird.

Die Erfindung stellt auf diese Weise eine Möglichkeit bereit, das Betätigungselement unter Ausübung einer denkbar geringen Bedienkraft in die Komfort-Position zu überführen. Beispielsweise kann die Bewegung des Betätigungselementes aus der Ruheposition in die Komfort-Position entgegen der Wirkung einer sehr schwachen Feder erfolgen. Ein derartiges Federelement ist jedoch auch nicht notwendig.

Es ist insbesondere vorgesehen, daß das Befestigungselement, welches mit einer sehr starken Feder in seine Sperrposition hinein vorgespannt ist, erst dann gegen die Wirkung der Federkraft verlagert wird, wenn das Betätigungselement aus der Komfort-Position in seine Arbeitsposition überführt wird. Das Betätigungselement kann in seiner Komfort-Position von einem Benutzer sehr komfortabel ergriffen werden, so daß die zur Verlagerung des Befestigungselementes aus der Sperrstellung in seine Freigabestellung erforderlichen Bedienkräfte von dem Benutzer ohne besondere Mühe aufgewendet werden können.

Insbesondere besteht bei dieser erfindungsgemäßen Lösung nunmehr die Möglichkeit, das in Ruhelage befindliche Betätigungselement versteckt am oder innerhalb des Gehäuses der Kfz-Sicherheitseinrichtung anzuordnen.

Die Unterbrechung der Wirkverbindung zwischen dem Betätigungselement und dem Befestigungselement für den Bewegungsabschnitt des Betätigungselementes aus dessen Ruheposition in seine Komfort-Position stellt auf gewisse Weise eine Entkopplung der Bewegung des Betätigungselementes von der Bewegung des Befestigungselementes dar. Da die Bewegung des Befestigungselementes nur gegen die Wirkung der großen Feder-Rückstellkraft möglich ist, bietet die entkoppelte Teil-Bewegung des Betätigungselementes die Möglichkeit einer Bewegung ohne große Bedienkräfte. Der Bereich dieser nur verschwindend geringe Bedienkräfte erfordernden Bewegung läßt sich erfindungsgemäß dafür nutzen, das Betätigungselement aus einer für den Benutzer nachteiligen, ohne weiteres nicht greifbaren Position in eine Komfort-Position zu verlagern, in der der Benutzer das Betätigungselement komfortabel fassen kann. Hat der Benutzer das Betätigungselement in dessen Komfort-Position ergriffen, können die erforderlichen Bedienkräfte zur Verlagerung des Befestigungselementes ohne weiteres ausgeübt werden.

Die Formulierung, wonach die Wirkverbindung zwischen Betätigungselement und Befestigungselement unterbrochen ist, schließt selbstverständlich auch solche Ausführungsformen mit ein, bei denen eine derartige Wirkverbindung zwischen Betätigungselement und Befestigungselement zwar dem Grunde nach erhalten bleibt, beispielsweise auf Grund einer variablen Übersetzung eines zwischen Betätigungselement und Befestigungselement angeordneten Getriebes oder einer sonstigen, insbesondere mechanischen Anordnung aber dafür gesorgt wird, daß die zur Verlagerung des Betätigungselementes aus der Ruheposition in die Komfort-Position erforderlichen Bedienkräfte sehr gering sind.

Durch das Vorsehen einer exponierten Komfort-Position des Betätigungselementes ist die Verlagerung des Befestigungselementes aus einer Sperrposition in eine Freigabeposition komfortabel durchführbar. Auch hierdurch wird eine besonders bequeme Handhabung gewährleistet.

Die fahrzeugseitige Festlegung des Gehäuses betrifft insbesondere die Festlegung der Kfz-Sicherheitseinrichtung unmittelbar an einer fahrzeugseitigen Verkleidung, z.B. Kfz-Seitenverkleidung, in der beispielsweise entsprechende Aufnahmen für die Befestigungselemente vorgesehen sind. Die fahrzeugseitige Festlegung schließt jedoch auch solche Anwendungen ein, bei denen ein Gehäuse einer Kfz-Sicherheitseinrichtung an einem anderen Kfz-Ausstattungsteil, beispielsweise an einem Gehäuse einer zweiten Kfz-Sicherheitseinrichtung festgelegt wird. Dieser Anwendungsfall betrifft z.B. sogenannte Huckepack-Lösungen, bei denen eine als Trennnetz ausgebildete Kfz-Sicherheitseinrichtung unmittelbar an einer weiteren als Laderaumabdeckung ausgebildeten Kfz-Sicherheitseinrichtung festgelegt wird. Schließlich umfaßt diese Formulierung auch die Festlegung einer Kfz-Sicherheitseinrichtung an einer Kfz-Rücklehne.

Im Rahmen der Erfindung ist es möglich, mittels des Betätigungselementes lediglich ein Befestigungselement zu verlagern, welchestypischerweise an einem axialen Endbereich des Gehäuses angeordnet ist. Es ist jedoch gleichermaßen auch möglich, an beiden axialen Endbereichen des Gehäuses jeweils ein oder auch mehrere Befestigungselemente vorzusehen.

Als Befestigungselement im Sinne dieser Erfindung wird auch eine axial endseitig an dem Gehäuse angeordnete Endkappe verstanden, welche ebenfalls, beispielsweise auf Grund einer axialen Federvorspannung, zwischen einer Freigabe- und einer Sperrposition verlagerbar ist.

Schließlich können zwei Befestigungselemente auch miteinander gekoppelt sein, derart, daß ein gemeinsames Betätigungselement für die wenigstens zwei Befestigungselemente vorgesehen ist. Außerdem können gemäß der Erfindung selbstverständlich auch mehrere Betätigungselemente an dem Gehäuse angeordnet werden.

Die versteckte Anordnung des in Ruheposition befindlichen Betätigungselementes bedeutet erfindungsgemäß, daß das Betätigungselement in der Ruheposition nicht exponiert ist, also von der Kfz-Sicherheitseinrichtung bzw. von deren Gehäuse nicht hervorragt. Auf diese Weise ist einerseits eine Unterbringung des Betätigungselementes möglich, die Verletzungsgefahren gänzlich ausschließt. Andererseits wird die Möglichkeit bereitgestellt, eine nach außen abschließende, einheitliche Gestaltung zu ermöglichen, die ein ansonsten, bei großen Hebellängen zu einem klobigen Gesamteindruck führendes Betätigungsteil vermeidet.

Gemäß einer vorteilhaften Ausgestaltung der Erfindung ist das in Ruheposition befindliche Betätigungselement im wesentlichen innerhalb der Kontur des Gehäuses angeordnet. Diese Ausgestaltung der Erfindung ermöglichet eine besonders platzsparende Bauweise, die die Handhabung weiter erleichtert.

Gemäß einer weiteren vorteilhaften Ausgestaltung der Erfindung ist das Betätigungselement als Hebel ausgebildet. Bei dieser Ausgestaltung besteht auf besonders einfache Weise die Möglichkeit, mit sehr geringen Bedienkräften sehr große Federvorspannkräfte des Befestigungselementes zu überwinden, so daß die Befestigungselemente mit einer besonders großen Federkraft in ihre Sperrposition hinein vorgespannt werden können.

Gemäß einer weiteren vorteilhaften Ausgestaltung der Erfindung ist der Hebel als zweiarmiger Hebel ausgebildet. Dies bietet auf besonders einfache Weise die Möglichkeit, den Hebel in eine Komfort-Position zu überführen. Hierzu können beispielsweise ein kurzer und ein langer Hebelarm vorgesehen sein, wobei durch Ausübung einer Druckkraft auf den kurzen Hebelarm der Hebel aus seiner Ruheposition in eine Komfort-Position überführt werden kann. Der lange Hebelarm ragt bei in Komfort-Position befindlichem Betätigungselement aus seinem Versteck exponiert heraus und kann leicht erfaßt werden.

Alternativ zu der Ausbildung des Betätigungselementes als zweiarmiger Hebel kann selbstverständlich auch vorgesehen sein, eine Anordnung nach Art eines zweifach betätigbaren Druckknopfes derart zu wählen, daß durch Ausübung einer ersten Druckkraft auf das Betätigungselement dieses in eine exponierte Komfort-Position ausfährt und durch eine nachfolgende Ausübung einer zweiten Druckkraft, die insbesondere größer ist als die erste Druckkraft, das Betätigungselement aus seiner Komfort-Position in die Arbeitsposition überführt wird.

Gemäß einer weiteren vorteilhaften Ausgestaltung der Erfindung weist das Betätigungselement eine zumindest visuell hervorgehobene Betätigungsfläche auf. Diese Betätigungsfläche dient der Verlagerung des in insbesondere versteckt angeordneter Ruhelage befindlichen Betätigungselements in seine Komfort-Position. Insbesondere bei versteckter Anordnung des in Ruhelage befindlichen Betätigungselementes ist dieses für den Benutzer nicht ohne weiteres sichtbar bzw. erkennbar. Eine visuelle hervorgehobene Betätigungsfläche kann nach Art einer optischen Anzeige dem Benutzer die Handhabung insoweit dadurch erleichtern, daß dieser ohne weiteres erkennt, wo er Druck-oder Zugkräfte auf das Betätigungselement ausüben muß, um diesen in die Komfort-Position zu überführen. Dabei kann in einer weiteren vorteilhaften Ausgestaltung die Betätigungsfläche in einer Mulde angeordnet sein.

Weitere Vorteile der Erfindung ergeben sich aus den nichtzitierten Unteransprüchen sowie an Hand der nun folgenden Beschreibung eines in den Figuren dargestellten Ausführungsbeispiels. Darin zeigen:
- Fig. 1: in teilgeschnittener Ansicht, einen axialen Endbereich einer erfindungsgemäßen Kfz-Sicherheitseinrichtung mit in Ruheposition befindlichem Betätigungselement und in Sperrposition befindlichen Befestigungselement,
- Fig. 2: die Kfz-Sicherheitseinrichtung gemäß Fig. 1 mit in Komfort-Position befindlichem Betätigungselement,
- Fig. 3: in einer Darstellung gemäß Fig. 2 die Kfz-Sicherheitseinrichtung mit in Arbeitsposition befindlichem Betätigungselement und in Freigabeposition befindlichem Befestigungselement, und

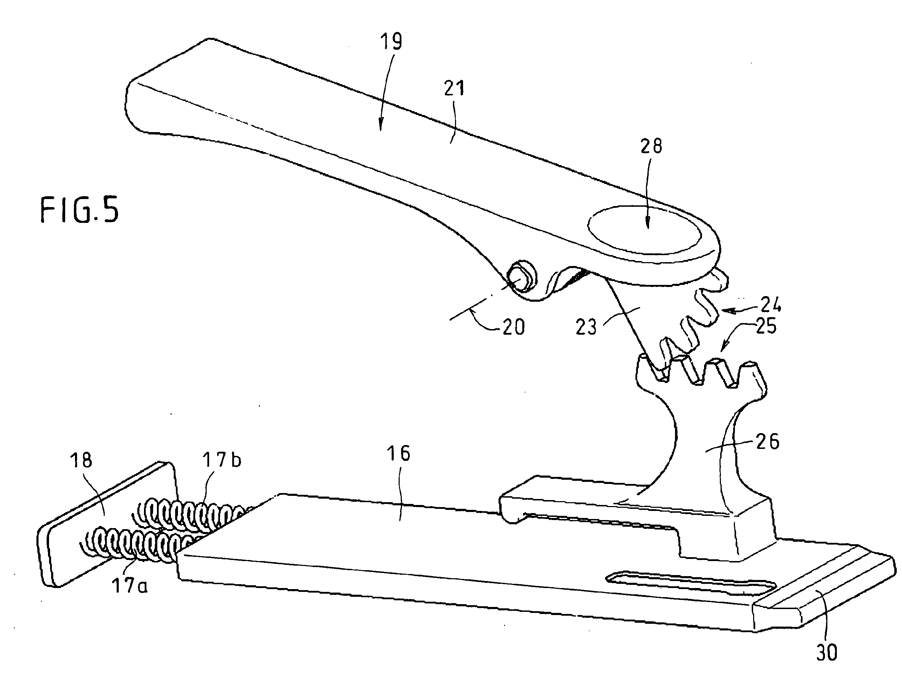

- die Fig. 4 bis 6: schematisch in perspektivischer Ansicht das Betätigungs-element und das Befestigungselement isoliert in drei unterschiedlichen Positionen gemäß den Fig. 1 bis 3.

Die in ihrer Gesamtheit mit dem Bezugszeichen 10 bezeichnete Kfz-Sicherheitseinrichtung ist beispielsweise als Kfz-Laderaumabdeckung ausgebildet. In diesem Fall wird die axial langgestreckt ausgebildete Kfz-Sicherheitseinrichtung 10 in Fahrzeugquerrichtung (Doppelpfeil Y) ausgerichtet und beispielsweise parallel zu dem oberen Rand einer nicht dargestellten Kfz-Fondlehne ausgerichtet. Die Kfz-Sicherheitseinrichtung 10 weist vorzugsweise ein Gehäuse 11 auf, welches üblicherweise eine Deckenwand 12, mehrere Seitenwände 13a, 13b und eine Bodenwand 14 aufweist. Die Wände 12, 13a, 13b, 14 definieren einen Innenraum 15, in dem auf nicht dargestellte Weise eine Wickelwelle drehbar aufgenommen ist, auf der eine Werkstoffbahn, also im Fall einer Laderaumabdeckung das Abdeckrollo aufgewickelt werden kann. Das Gehäuse 11 weist hierzu üblicherweise einen nicht dargestellten Auslaufschlitz für die Werkstoffbahn auf.

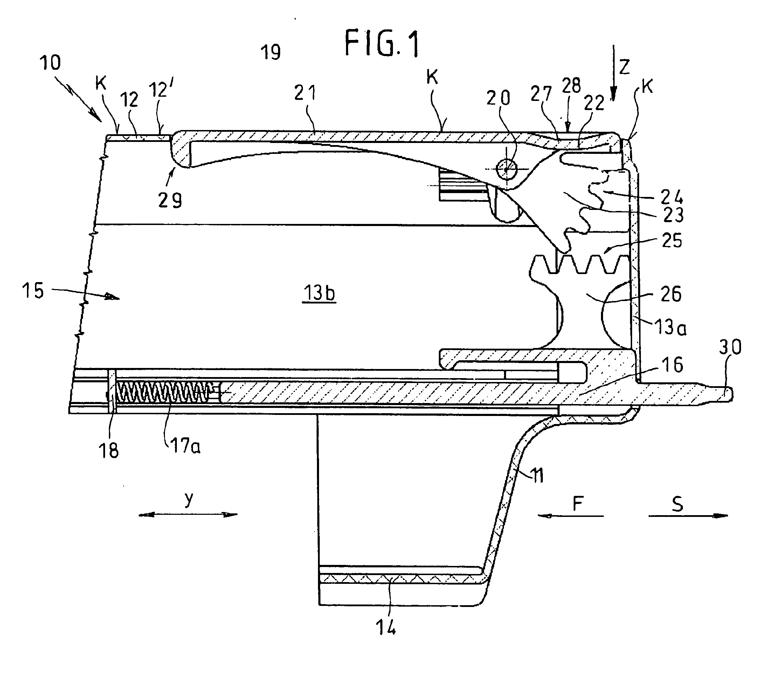

Fig. 1 zeigt eine teilgeschnittene Ansicht entsprechend einer Blickrichtung in Fahrtrichtung des Kfz nach vorne eines in Fahrtrichtung rechten Randbereichs der Laderaumabdeckung 10. Zu sehen ist also lediglich der in Fahrtrichtung rechte Endbereich der Laderaumabdeckung 10, die sich bezüglich Fig. 1 nach links fortsetzt.

Fig. 1 zeigt ein Befestigungselement 16 nach Art eines Flachriegels, der zwischen einer in Fig. 1 dargestellten Sperrposition und einer in Fig. 3 dargestellten Freigabeposition entlang der Pfeile F, S verlagerbar ist. Das Verankerungsende 30 des Befestigungselementes 16 greift bei in Sperrposition befindlichem Zustand des Befestigungselementes 16 in eine nicht dargestellte fahrzeugseitige Aufnahme für das Verankerungsende 30 ein. Insbesondere ist vorgesehen, eine Aufnahmetasche für den bezüglich Fig. 1 rechten Endbereich der Sicherheitseinrichtung 10 in einer Kfz-Seitenverkleidung vorzusehen, wobei innerhalb der Aufnahmetasche, in die die Stirnwand 13a einfährt, eine gesonderte Ausnehmung für das Verankerungsende 30 des Befestigungselementes 16 angeordnet ist.

Auf dem bezüglich Fig. 1 linken, nicht dargestellten gegenüberliegenden Endbereich der Laderaumabdeckung 10 kann ein entsprechendes Befestigungselement 16 vorgesehen sein, was jedoch nicht zwingend erforderlich ist.

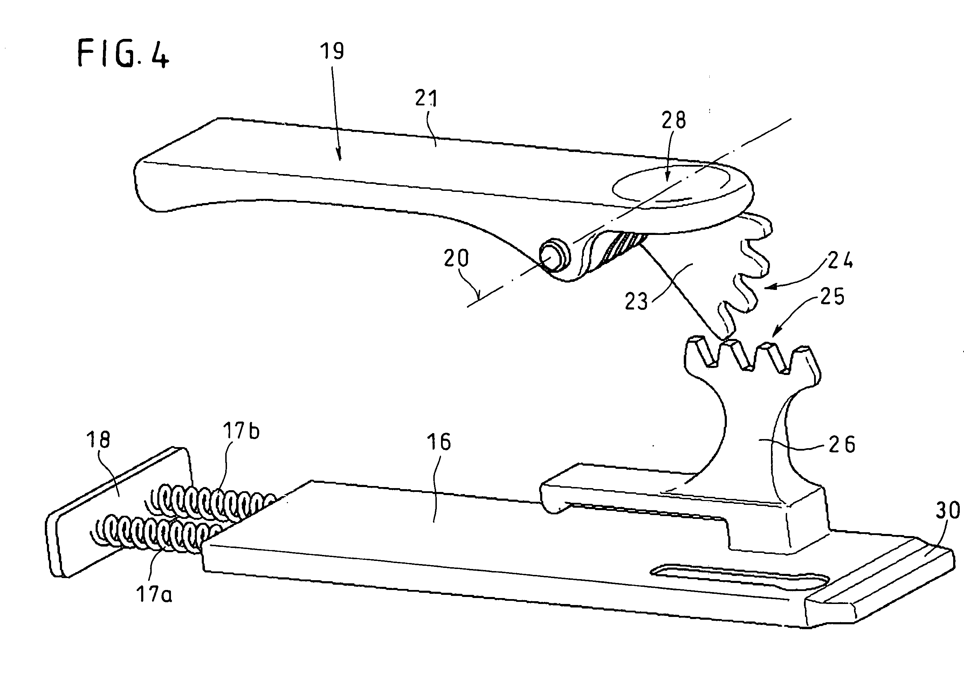

Das Befestigungselement 16 gemäß Fig. 1 ist mittels zweier Federelemente 17a, 17b, die sich an einer gehäusefesten Abstützung 18 abstützen, in Sperrrichtung S vorgespannt. Fig. 4 läßt erkennen, daß es sich beispielsweise um zwei gesonderte, parallel verlaufende Federelemente 17a, 17b handeln kann, was jedoch nicht erforderlich ist. Die Doppelanordnung von Federelementen 17a, 17b macht jedoch deutlich, daß die auf das Befestigungselement 16 ausgeübte Vorspannkraft sehr hoch gewählt ist, um einen sicheren Rastsitz des Verankerungsendes 30 in der dafür vorgesehenen Aufnahme zu gewährleisten.

Bezüglich Fig. 1 ist oberhalb des Befestigungselementes 16 ein Betätigungselement 19 angeordnet. Dieses ist als um eine Schwenkachse 20 schwenkbarer Hebel mit einem ersten Hebelarm 21 und einem zweiten Hebelarm 22 ausgebildet. An einem zweiten Hebelarm 22 ist ein Fortsatz 23 mit einer Verzahnung 24 angeordnet. Eine entsprechende Gegenverzahnung 25 ist an einem Gegenfortsatz 26 vorgesehen, welcher fest, vorteilhafterweise einstückig, mit dem Befestigungselement 16 verbunden ist.

Ausgehend von einer Position gemäß Fig. 1 kann ein Benutzer durch Ausübung einer Druckkraft entlang dem Pfeil Z in Fig. 1 auf den zweiten Hebelarm 22 eine Verschwenkung des Betätigungselementes 19 im Uhrzeigersinn um die Schwenkachse 20 herum erreichen. Hierzu ist im Bereich des zweiten Hebelarmes 22 an dem Betätigungselement 19 eine besondere Betätigungsfläche 27 vorgesehen. Diese ist beim Ausführungsbeispiel in einer Betätigungsmulde 28 angeordnet, so daß ein Benutzer die Betätigungsfläche 27 als solche schnell erkennen kann.

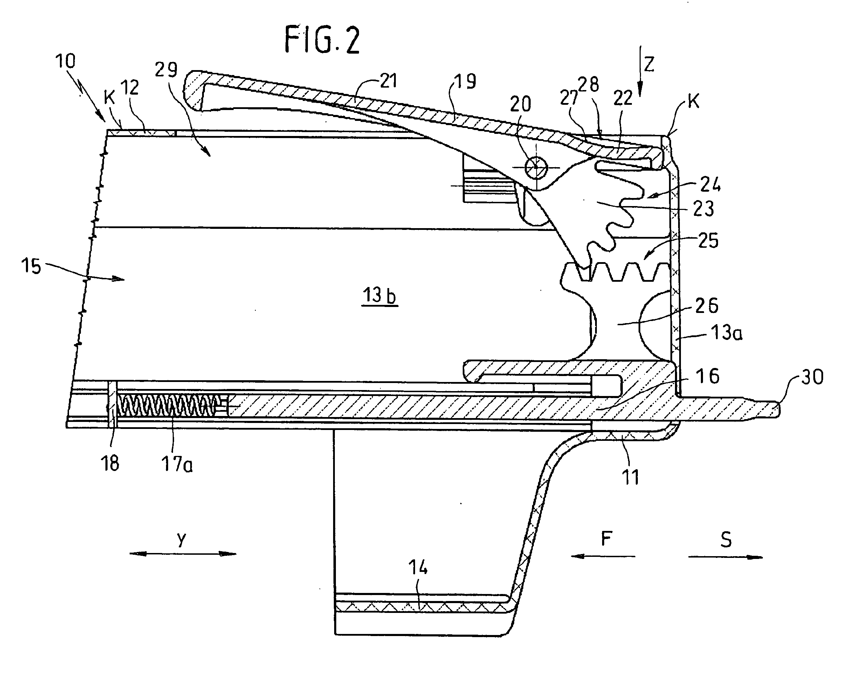

Durch Druckausübung auf die Betätigungsfläche 27 entlang der Richtung des Pfeiles Z und durch Erzeugung eines Drehmomentes wird das Betätigungselement 19 in eine Komfort-Position gemäß Fig. 2 verschwenkt. Der Schwenkwinkel beträgt beim Ausführungsbeispiel etwa 8 Grad, wobei dies selbstverständlich lediglich beispielhaft zu sehen ist.

Wie aus den Fig. 1 und 2 hervorgeht, sind die Verzahnungen 24 und 25 des Fortsatzes 23 und des Gegenfortsatzes 26 derart ausgebildet, daß während der Verschwenkung des Betätigungselementes 19 aus der Ruhelage gemäß Fig. 1 in die Komfort-Position gemäß Fig. 2 noch kein Eingriff der Verzahnungen 24, 25 ineinander stattfindet. Eine Verschwenkung in die Komfort-Position erfordert somit nur äußerst geringe Bedienkräfte, wobei bei dem Ausführungsbeispiel gemäß den Figuren praktisch nur das von dem längeren Hebelarm 21 auf Grund seiner Gewichtskraft verursachte Gegendrehmoment überwunden werden muß.

Insbesondere ist vorgesehen, auf die Betätigungsfläche 27 mit lediglich einem Finger eines Benutzers leicht zu tippen, um das Betätigungselement 19 in seine Komfort-Position gemäß Fig. 2 zu überführen.

Während das Betätigungselement 19 gemäß Fig. 1 in einem innerhalb des Gehäuses 11 angeordneten Einbauraum 29 angeordnet ist, und in Ruhelage nahezu bündig mit der Außenseite 12' der Deckenwand 12 des Gehäuses 11 abschließt, aus der Kontur K des Gehäuses 11 somit praktisch nicht hervortritt, ist das Betätigungselement 19 in seiner Komfort-Position gemäß Fig. 2 exponiert und tritt dem Benutzer auf diese Weise gewissermaßen entgegen.

Das Betätigungselement 19 ist in seiner Komfort-Position gemäß Fig. 2 durch den Benutzer auf besonders einfache Weise greifbar. Mit den Fingern seiner Hand kann ein Benutzer den ersten Hebelarm 21 des Betätigungselementes 19 ohne weiteres greifen und eine Bedienkraft ausüben, die zu einer weiteren Verschwenkung des Betätigungselementes 19 ausgehend von der Position gemäß Fig. 2 in eine Arbeitsposition gemäß Fig. 3 führt. Die für die Verschwenkung von der Komfort-Position in die Arbeitsposition erforderlichen auszuübenden Bedienkräfte sind nun sehr viel höher, da auf Grund des Ineinandergreifens der Verzahnungen 24 und 25 eine Wirkverbindung zwischen dem Betätigungselement 19 und dem Befestigungselement 16 besteht und das Befestigungselement 16 entgegen der großen Federkraft der Federelemente 17a, 17b in Freigaberichtung F verlagert werden soll. Auf Grund der Ausbildung des Betätigungselementes 19 als Hebel mit einem verhältnismäßig lang ausgebildeten Hebelarm 21 können die Bedienkräfte jedoch derart günstig eingestellt werden, daß die Verlagerung des Befestigungselements 16 aus seiner Sperrposition gemäß Fig. 1 in eine Feigabeposition gemäß Fig. 3 ohne besondere Mühe auf einfache Weise möglich ist.

In der Arbeitsposition gemäß Fig. 3 dient das Befestigungselement 19 zugleich als Tragegriff für die Laderaumabdeckung 10, d.h. ein Benutzer kann die Laderaumabdeckung 10 in einem Handgriff bzw. in einem Arbeitsschritt entriegeln und durch tragenden Transport durch Umgreifen des Betätigungselementes 19 aus dem Laderaum des Kraftfahrzeugs tragend entnehmen.

Wenn die aus dem Kraftfahrzeug entnommene Laderaumabdeckung gesondert aufbewahrt werden soll, wird das Betätigungselement 19 in eine Ruhelage gemäß Fig. 1 rücküberführt, so daß eine besonders platzsparende Aufbewahrung möglich wird, da das Betätigungselement 19 wiederum aus der Kontur K des Gehäuses 11 nicht hervorragt.

Die Ruheposition gemäß Fig. 1, die Komfort-Position gemäß Fig. 2 und die Arbeitsposition des Betätigungselementes gemäß Fig. 3 können vorteilhafterweise, beispielsweise durch einen Rastmechanismus arretiert werden. Dies kann weitere Erleichterungen bei der Handhabung bieten.

Bei der Anordnung von Betätigungsfläche 27 und zweitem Hebelarm 21 gemäß dem in den Figuren dargestellten Ausführungsbeispiel ist eine Handhabung besonders einfach, da ein Benutzer mit einem Daumen seiner rechten Hand auf die Betätigungsmulde 28 leicht drücken kann, was nahezu ohne Kraftaufwand möglich ist. Der erste Hebelarm 21 fährt hierdurch aus dem Gehäuse 11 heraus, dem Benutzer entgegen, so daß der Benutzer unmittelbar mit den übrigen vier Fingern seiner rechten Hand den ersten Hebelarm 21 umgreifen, und die Laderaumabdeckung 10 tragen und dem Kraftfahrzeug entnehmen kann. In diesem Fall ist eine Arretierung der Komfort-Position des Betätigungselementes 19 nicht notwendig.

Eine Besonderheit des Verzahnungsmechanismus der Fortsätze 23 und 26 ist darin zu sehen, daß bei in Ruheposition befindlichem Betätigungselement 19 gemäß Fig. 1 eine Verlagerbarkeit des Befestigungselementes 16 gegeben ist, da die Verzahnungen 24 und 25 in dieser Position nicht in Eingriff kommen. Beispielsweise kann an dem Verankerungsende 30 des Befestigungselementes 16 eine nicht dargestellte Keilfläche vorgesehen sein, die nach Art eines Schnappriegels ausgebildet ist, so daß das Befestigungselement 16 beim Einsetzen der Laderaumabdeckung 10 in die fahrzeugseitigen, nicht dargestellten Aufnahmetaschen automatisch einschnappt, wenn sich das Betätigungselement 19 in Ruheposition befindet. Diese Einschnappbewegung wird bei in Ruheposition befindlichem Betätigungselement 19 nicht behindert.

Andererseits kann es auch von Bedeutung sein, daß ein Benutzer darauf aufmerksam gemacht werden soll, daß die Kfz-Sicherheitseinrichtung nach dem Einsetzen in das Kfz keinen ordnungsgemäßen Rastsitz aufweist. Dies wird mit der gewählten, erfindungsgemäßen Anordnung dadurch begünstigt, daß eine Bedienperson, die die Kfz-Sicherheitseinrichtung an dem Betätigungselement 19, welches sich in Arbeitsstellung befindet, trägt, und die Kfz-Sicherheitseinrichtung einsetzen möchte, das Betätigungselement nur dann in seine Komfort-Position (aus seiner Arbeitsstellung heraus) verlagern kann, wenn das Befestigungselement 16 aus seiner Freigabeposition in seine Sperrposition einfährt. Für den Fall, daß die Kfz-Sicherheitseinrichtung 10 ihren ordnungsgemäßen Rastsitz nicht erreicht hat bzw. beispielsweise das Verankerungsende 30 des Befestigungselementes 16 die fahrzeugseitige Aufnahmetasche hierfür aus irgendeinem Grunde nicht erreicht, kann das Betätigungselement 19 nicht in seine Komfort-Position und ausgehend von der oben dargestellten Situation auch nicht in seine Ruhestellung verlagert werden.

Dem Benutzer wird auf diese Weise angezeigt, daß die ordnungsgemäße Einbausituation der Kfz-Sicherheitseinrichtung nicht erreicht worden ist.

Die Betätigungsmulde 28 ist für die Bedienung des Betätigungselementes 19 von Vorteil. Es können jedoch auch andere ergonomisch vorteilhafte Maßnahmen getroffen werden, beispielsweise durch Anbringung von Fingermulden auf der Unterseite des ersten Hebelarms 21.

Schließlich kann die Betätigungsfläche 27 nicht nur rein visuell hervorgehoben werden, also beispielsweise farbig, sondern es können auch weitere Hervorhebungen, beispielsweise durch Formgebung vorgesehen werden. Die Betätigungsmulde 28 ist in diesem Zusammenhang eine visuelle Hervorhebung, da man den Muldengrund visuell wahrnimmt und von dem übrigen Bereich des Betätigungselements 19 unterscheiden kann. Sie ist aber zugleich auch eine formgebende Hervorhebung.

## Patentansprüche

1. Kfz-Sicherheitseinrichtung (10), wie Laderaumabdeckung, Trennetz, Sonnenrollo od. dgl., insbesondere für Kombinations-Personenkraftfahrzeuge, mit einer flexiblen Werkstoffbahn, die in ihrer Nichtgebrauchsstellung in einem Gehäuse (11) unterbringbar ist, welches mittels wenigstens einem Befestigungselement (16) fahrzeugseitig festlegbar ist, wobei ein zwischen einer Ruheposition und einer Arbeitsposition verlagerbares Betätigungselement (19) für das Befestigungselement (19) vorgesehen ist, **dadurch gekennzeichnet, dass** das Betätigungselement (19) in der Ruheposition derart bündig abschließend im Gehäuse aufgenommen ist, dass es von einem Benutzer nicht ohne weiteres ergriffen werden kann, und dass dem Betätigungselement (19) eine Komfort-Position zugeordnet ist, aus der es in die Arbeitsposition überführbar ist, sowie dass das Betätigungslement aus seiner Ruheposition (Fig. 1) bei unterbrochener Wirkverbindung zu dem Befestigungselement (16) aus dem Gehäuse heraus in die Komfort-Position überführbar ist, so dass der Benutzer das Betätigungselement mit den Fingern seiner Hand ohne weiteres fassen kann.

2. Kfz-Sicherheitseinrichtung nach Anspruch 1, **dadurch gekennzeichnet, dass** das Betätigungselement (19) als Hebel ausgebildet ist.

3. Kfz-Sicherheitseinrichtung nach Anspruch 2, **dadurch gekennzeichnet, dass** der Hebel (19) als zweiarmiger Hebel (21, 22) ausgebildet ist.

4. Kfz-Sicherheitseinrichtung nach Anspruch 2 oder 3, **dadurch gekennzeichnet, dass** ein Hebelarm (22) einen Fortsatz (23) zum Zusammenwirken mit dem Befestigungselement (16) aufweist.

5. Kfz-Sicherheitseinrichtung nach einem der vorangegangenen Ansprüche, **dadurch gekennzeichnet, dass** der Hebel (19, 21) als Tragegriff für die Kfz-Sicherheitseinrichtung (10) ausgebildet ist.

6. Kfz-Sicherheitseinrichtung nach einem der vorangegangenen Ansprüche, **dadurch gekennzeichnet, dass** das Betätigungselement (19) eine zumindest visuell hervorgehobene Betätigungsfläche (27) aufweist.

7. Kfz-Sicherheitseinrichtung nach Anspruch 6, **dadurch gekennzeichnet, dass** die Betätigungsfläche (27) in einer Mulde (28) angeordnet ist.

8. Kfz-Sicherheitseinrichtung nach einem der vorangegangenen Ansprüche, **dadurch gekennzeichnet, dass** das Betätigungselement (19) in seiner Komfort-Position arretierbar ist.

9. Kfz-Sicherheitseinrichtung nach einem der vorangegangenen Ansprüche, **dadurch gekennzeichnet, dass** das Betätigungselement (19) in seiner Arbeitsposition arretierbar ist.

10. Kfz-Sicherheitseinrichtung nach einem der vorangegangenen Ansprüche, **dadurch gekennzeichnet, dass** das Betätigungselement (19) in seiner Ruheposition arretierbar ist.

11. Kfz-Sicherheitseinrichtung nach einem der vorangegangenen Ansprüche, **dadurch gekennzeichnet, dass** das Befestigungselement (16) bei in Arbeitsposition befindlichem Betätigungselement (19) in einer Sperrposition angeordnet ist.

12. Kfz-Sicherheitseinrichtung nach einem der vorangegangenen Ansprüche, **dadurch gekennzeichnet, dass** das Befestigungselement (16) bei in Ruheposition befindlichem Betätigungselement (19) in einer Freigabeposition anordenbar ist.

13. Kfz-Sicherheitseinrichtung nach einem der vorangegangenen Ansprüche, **dadurch gekennzeichnet, dass** das Befestigungselement (16) bei in Ruheposition befindlichem Betätigungselement (19) verlagerbar ist.

14. Kfz-Sicherheitseinrichtung nach einem der vorangegangenen Ansprüche, **dadurch gekennzeichnet, dass** das Befestigungselement (16) bei in Komfort-Position befindlichem Betätigungselement (19) in einer Freigabeposition angeordnet ist.

## Claims

1. Vehicle safety device (10), such as a storage space cover, partition net, sun blind or the like, in particular for estate type vehicles, having a flexible fabric web which can be accommodated in a housing (11) in the non-use position and which can be secured at the vehicle side by means of at least one fixing element (16), an activation element (19) which can be moved between a rest position and an operating position being provided for the fixing element (19), **characterised in that** the activation element (19) is received in the housing in such a flush closing manner in the rest position that it cannot be readily gripped by a user, and **in that** a comfort position is associated with the activation element (19) from which it can be moved into the operating position, and **in that** the activation element can be moved from its rest position (Figure 1) out of the housing into the comfort position when the operational connection to the fixing element (16) is interrupted, so that the user can readily grasp the activation element with the fingers of his hand.

2. Vehicle safety device according to claim 1, **characterised in that** the activation element (19) is constructed as a lever.

3. Vehicle safety device according to claim 2, **characterised in that** the lever (19) is constructed as a lever with two arms (21, 22).

4. Vehicle safety device according to claim 2 or 3, **characterised in that** a lever arm (22) has a projection (23) for co-operating with the fixing element (16).

5. Vehicle safety device according to any one of the preceding claims, **characterised in that** the lever (19, 21) is constructed as a carrier handle for the vehicle safety device (10).

6. Vehicle safety device according to any one of the preceding claims, **characterised in that** the activation element (19) has an at least visually highlighted activation face (27).

7. Vehicle safety device according to claim 6, **characterised in that** the activation face (27) is arranged in a cavity (28).

8. Vehicle safety device according to any one of the preceding claims, **characterised in that** the activation element (19) can be arrested in the comfort position thereof.

9. Vehicle safety device according to any one of the preceding claims, **characterised in that** the activation element (19) can be arrested in the operating position thereof.

10. Vehicle safety device according to any one of the preceding claims, **characterised in that** the activation element (19) can be arrested in the rest position thereof.

11. Vehicle safety device according to any one of the preceding claims, **characterised in that** the fixing element (16) is arranged in a locking position when the activation element (19) is in the operating position.

12. Vehicle safety device according to any one of the preceding claims, **characterised in that** the fixing element (16) can be arranged in a release position when the activation element (19) is in a rest position.

13. Vehicle safety device according to any one of the preceding claims, **characterised in that** the fixing element (16) can be displaced when the activation element (19) is in a rest position.

14. Vehicle safety device according to any one of the preceding claims, **characterised in that** the fixing element (16) is arranged in a release position when the activation element (19) is in a comfort position.

## Revendications

1. Dispositif de sécurité pour véhicules (10), tel qu'un recouvrement de compartiment à bagages, un filet de séparation, un store pare-soleil ou autre semblable, en particulier pour des voitures particulières de type break, avec une bande de matière flexible, qui peut être logée dans un boîtier (11) dans sa position de non utilisation, lequel boîtier peut être immobilisé côté véhicule par l'intermédiaire d'au moins un élément de fixation (16), un élément d'actionnement (19).déplaçable entre une position de repos et une position de travail étant prévu pour l'élément de fixation (19), **caractérisé en ce que** l'élément de fixation (19) se termine en affleurement dans le boîtier en position de repos de sorte qu'il ne peut être saisi facilement par un utilisateur, et **en ce qu'**une position de confort est affectée à l'élément d'actionnement (19), depuis laquelle il peut être transféré en position de travail, et **en ce que** l'élément d'actionnement peut être sorti du boîtier, de sa position de repos (figure 1), et mis dans sa position de confort lorsque la liaison fonctionnelle avec l'élément de fixation (16) est interrompue, de sorte que l'utilisateur peut facilement saisir l'élément d'actionnement avec les doigts de sa main.

2. Dispositif de sécurité pour véhicules selon la revendication 1, **caractérisé en ce que** l'élément d'actionnement (19) est conçu sous forme de levier.

3. Dispositif de sécurité pour véhicules selon la revendication 2, **caractérisé en ce que** le levier (19) est conçu comme un levier à deux bras (21, 22).

4. Dispositif de sécurité pour véhicules selon la revendication 2 ou 3, **caractérisé en ce qu'**un bras de levier (22) présente un prolongement (23) destiné à coopérer avec l'élément de fixation (16).

5. Dispositif de sécurité pour véhicules selon l'une quelconque des revendications précédentes, **caractérisé en ce que** le levier (19, 21) est conçu sous forme de poignée de transport pour le dispositif de sécurité pour véhicules (10).

6. Dispositif de sécurité pour véhicules selon l'une quelconque des revendications précédentes, **caractérisé en ce que** l'élément d'actionnement (19) présente une surface d'actionnement (27) qui se distingue au moins visuellement du reste de l'élément.

7. Dispositif de sécurité pour véhicules selon la revendication 6, **caractérisé en ce que** la surface d'actionnement (27) est prévue dans une cavité (28).

8. Dispositif de sécurité pour véhicules selon l'une quelconque des revendications précédentes, **caractérisé en ce que** l'élément d'actionnement (19) peut être bloqué dans sa position de confort.

9. Dispositif de sécurité pour véhicules selon l'une quelconque des revendications précédentes, **caractérisé en ce que** l'élément d'actionnement (19) peut être bloqué dans sa position de travail.

10. Dispositif de sécurité pour véhicules selon l'une quelconque des revendications précédentes, **caractérisé en ce que** l'élément d'actionnement (19) peut être bloqué dans sa position de repos.

11. Dispositif de sécurité pour véhicules selon l'une quelconque des revendications précédentes, **caractérisé en ce que** l'élément de fixation (16) est disposé dans une position de blocage lorsque l'élément d'actionnement, (19) se trouve en position de travail.

12. Dispositif de sécurité pour véhicules selon l'une quelconque des revendications précédentes, **caractérisé en ce que** l'élément de fixation (16) peut être disposé dans une position de déblocage lorsque l'élément d'actionnement (19) se trouve en position de repos.

13. Dispositif de sécurité pour véhicules selon l'une quelconque des revendications précédentes, **caractérisé en ce que** l'élément de fixation (16) peut être déplacé lorsque l'élément d'actionnement (19) se trouve en position de repos.

14. Dispositif de sécurité pour véhicules selon l'une quelconque des revendications précédentes, **caractérisé en ce que** l'élément de fixation (16) est disposé dans une position de déblocage lorsque l'élément d'actionnement (19) se trouve en position de confort.
